# DEMANDE DE BREVET EUROPEEN

(11) **EP 2 412 919 A1**
(43) Date de publication de la demande: **01.02.2012**
(21) Numéro de dépôt: 11290329.9
(22) Date de dépôt: 19.07.2011
(51) Int. Cl.: E21B 43/00, E21B 43/16

(54) **Procédé de prévention de perte d'injectivité par précipitation de sel lors de stockage géologique de CO2**

(30) Priorité: 29.07.2010 FR 1003183
(71) Demandeur: IFP Energies nouvelles, 92852 Rueil-Malmaison Cedex (FR)
(72) Inventeur: Peysson, Yannick, 92500 Rueil Malmaison (FR); Bazin, Brigitte, 75017 Paris (FR)

(57) **Abrégé**

Procédé de prévention de perte d'injectivité par précipitation de sel lors de stockage géologique de CO₂.

On réalise un forage d'au moins un puits d'injection jusqu'à atteindre l'aquifère salin. Puis, préalablement à l'injection de CO2, on injecte un produit permettant de réduire la mouillabilité à l'eau de la roche de l'aquifère au voisinage du puits. Cette injection de produit peut se faire avant tout injection de CO₂, ou après une première injection limitée de CO₂, ou de façon alternative.

## Description

La présente invention concerne le domaine du stockage permanent de CO₂ dans des aquifères salins. L'invention concerne notamment un procédé de prévention de perte d'injectivité par précipitation de sel lors de l'injection de CO₂ dans un aquifère salin.

La capture des émissions de CO₂ sur les sources à fort débit (ex : centrales thermiques), le transport de ce CO₂ et son stockage dans des formations souterraines appropriées est une des solutions parmi d'autres pour réduire les émissions de gaz à effet de serre dans l'atmosphère. Des projets pilotes de stockage géologique de CO₂ existent d'ores et déjà, mais la poursuite du déploiement de cette technologie nécessite des technologies de grande qualité pour répondre aux exigences des réglementations en cours de mise en place ainsi que pour répondre aux attentes du public.

Les aquifères salins sont des roches poreuses contenant de la saumure (eau+sel). Ils constituent des objets géologiques très intéressants pour le stockage géologique du CO₂. En effet, leurs capacités de stockage sont du bon ordre de grandeur par rapport aux quantités de dioxyde de carbone à stocker si l'on vise de réinjecter 20% des émissions mondiales d'ici une décennie.

Cependant, même si les volumes correspondent, il est nécessaire d'assurer un niveau d'injectivité élevé car les sites de stockage sont et seront composés d'un nombre limité de puits, pour des raisons entre autre, d'intégrité du site de stockage. Ainsi, toute cause de dégradation de la perméabilité proche du puits représente un problème sérieux pour le site de stockage.

Parmi ces causes de dégradation, la précipitation de sel dans la porosité d'un aquifère salin, peut bloquer de manière importante les écoulements du gaz carbonique et affecter le niveau d'injectivité. La précipitation des sels présents dans la saumure aquifère est engendrée par l'assèchement du proche puits provoqué par l'injection du CO₂ sec. Cette précipitation est hétérogène et se concentre dans la zone proche des faces du puits d'injection.

L'objet de l'invention concerne un procédé de stockage de CO₂ en aquifère salin, dans lequel on prévient une perte d'injectivité due à une précipitation de sel. Selon l'invention, on injecte au préalable un modificateur de mouillabilité dans la zone proche du puits, afin de rendre non mouillant à l'eau la zone proche du puits. De cette façon les contre écoulements de saumure en direction de la paroi sont empêchés ou limités.

Le procédé de stockage de CO₂ selon l'invention, comporte la réalisation d'un forage d'au moins un puits d'injection jusqu'à atteindre l'aquifère salin, l'injection de CO₂ dans l'aquifère salin, et, préalablement à une injection de CO₂, l'injection d'un produit permettant de réduire la mouillabilité à l'eau de la roche de l'aquifère au voisinage du puits.

Le produit peut être injecté avant toute injection de CO₂ dans l'aquifère salin, ou après une première injection de CO₂, cette première injection de CO₂ étant arrêtée avant apparition d'une perte d'injectivité.

Selon l'invention, on peut également réaliser successivement des injections de produit et des injections de CO₂.

Selon un mode de réalisation, on marque un temps d'attente entre une injection de produit et une injection de CO₂, le temps d'attente étant défini de façon à permettre au produit de réduire suffisamment la mouillabilité à l'eau de la roche de l'aquifère.

Enfin, on peut choisir le produit parmi les produits suivants :
- amines ;
- surfactants cationiques en particulier des sels d'alkylammonium ;
- quinoléines, porphyrines en particulier le Vanadyl-octaethyl-porphyric ;
- acides gras.

D'autres caractéristiques et avantages de l'invention, apparaîtront à la lecture de la description ci-après complétée d'exemples non limitatifs de réalisations, en se référant aux figures annexées et décrites ci-après :
- la figure 1 illustre le sous-sol (SS), dans lequel se trouve un aquifère salin (AS) atteint par un puits d'injection (PI).
- La figure 2 illustre la diminution de perméabilité d'échantillon de Grès et de Calcaire en fonction de la salinité des saumures.
- La figure 3 montre la structure du milieu poreux avant et après séchage. Grès des Vosges.
- La figure 4 illustre la variation de porosité le long de l'échantillon en fin d'assèchement (en x=0, face d'injection).
- La figure 5A illustre le phénomène de précipitation de sels dans le cadre d'injection de CO₂ classique.
- La figure 5B illustre l'effet de la réduction de mouillabilité à l'eau de la roche.

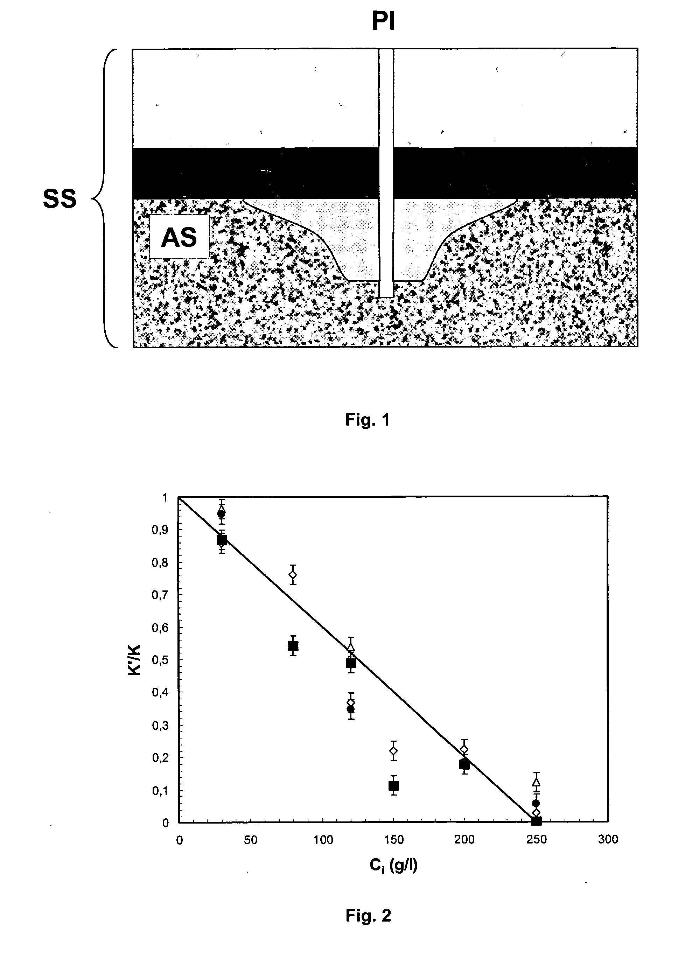

Pour stocker du CO₂ dans un aquifère salin, la première étape consiste à forer un puits à travers les formations géologiques jusqu'à atteindre cet aquifère. La figure 1 illustre le sous-sol (SS), dans lequel se trouve un aquifère salin (AS) atteint par un puits d'injection (PI). Généralement, on commence alors à injecter le CO₂ à une température donnée. Ce CO₂ est parfois mélangé avec d'autres composés, mais ce mélange ne contient jamais d'eau (ou à l'état de trace), pour éviter la corrosion des installations. On parle de CO₂ sec. De ce fait, une partie de l'eau s'équilibre sous forme vapeur dans le gaz par équilibre thermodynamique. Les sels contenus dans l'eau se retrouvent alors bloqués dans la porosité de la roche, réduisant la perméabilité. Cette précipitation des sels présents dans la saumure de l'aquifère est donc engendrée par l'assèchement du proche puits provoqué par l'injection du CO₂ sec. Cette précipitation est hétérogène et se concentre dans la zone proche des parois du puits d'injection.

Ce phénomène de diminution de perméabilité engendrée par l'assèchement total d'un échantillon de roche, a été étudié sur des échantillons cylindriques de type carotte.

Des échantillons cylindriques de deux types de roche de stockage potentiel grés (grès des Vosges) et carbonate (calcaire de lavoux) ont été imbibés à 100% d'une saumure de concentration en sel contrôlée. Les échantillons ont ensuite été placés en étuve et asséché totalement.

La réduction de perméabilité au gaz pour ces échantillons a été systématiquement mesurée. Les résultats sont représentés sur la figure 2, qui montre une diminution de perméabilité d'échantillon de Grès (losanges et triangles) et de Calcaire (carré et ronds noirs) en fonction de la salinité des saumures. L'axe X des abscisses(Ci) indique la salinité des saumures, et l'axe des ordonnées (K'/K) représente la perméabilité en fin de séchage divisé par la perméabilité initiale de l'échantillon.

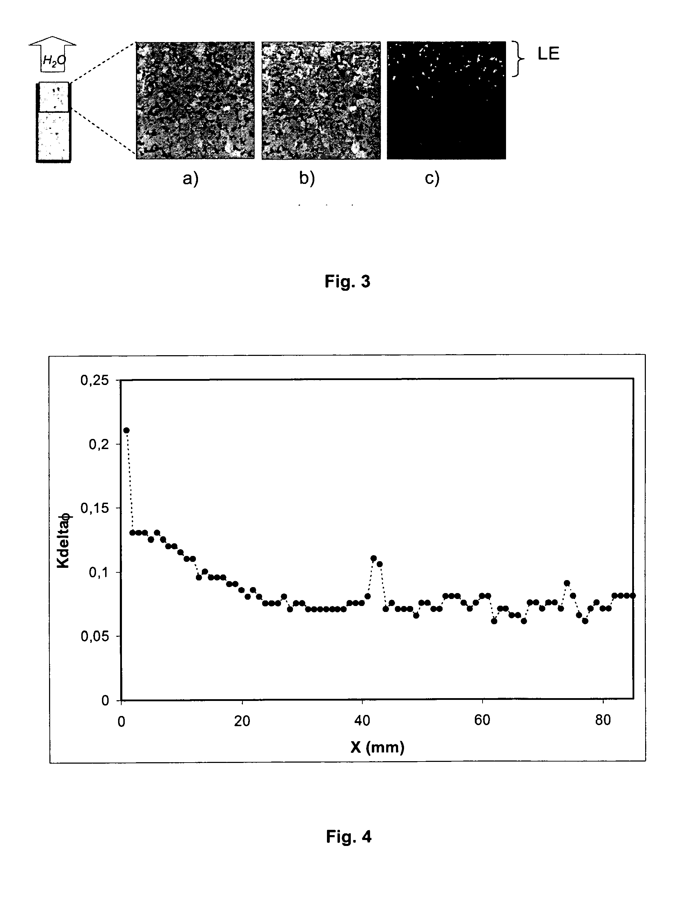

Ces études montrent également que la précipitation est hétérogène et que les sels se précipitent près des parois. Ce phénomène a lieu quel que soit la façon d'assécher le milieu, séchage à l'étuve sans écoulement ou séchage par un écoulement dans l'échantillon. La figure 3 montre la localisation près de la surface de la précipitation de sel pour un séchage à l'étuve : a) représente l'image initial du milieu poreux sec, b) représente l'image en fin de séchage (les sels précipités apparaissent en blanc), et c) représente la différence entre les images a) et b). On constate bien la présence de sels au niveau de la face d'évaporation (LE).

Dans un séchage par écoulement, les sels précipitent sur la face d'injection. En effet, le gaz injecté sèche principalement la face d'injection qui se rééquilibre en saumure par des mouvements capillaires dans le milieu poreux. Ces mouvements capillaires transportent la saumure vers la surface et les sels s'accumulent.

En fin d'assèchement, une croute de sel est présente sur la face d'injection et les profils de porosité scanner présente une augmentation nette près de la face d'injection.

La figure 4 illustre la variation de porosité le long de l'échantillon en fin d'assèchement par écoulement de gaz sec. L'axe X des abscisses indique la distance par rapport à la face d'injection (en x=0, face d'injection), et l'axe des ordonnées (KdeltaΦ) représente la différence de porosité avant et après assèchement.

L'accumulation du sel à la paroi résulte donc d'un rééquilibrage capillaire au sein de l'échantillon. La paroi asséchée se réimbibe en saumure, accumulant du sel près de la paroi. Le sel rediffuse dans l'échantillon par diffusion de Fick, mais cet effet est trop lent dans la plupart des cas et le sel précipite près des parois.

Il ressort de ces expériences, que le moteur de la précipitation hétérogène est la force capillaire.

Le principe de l'invention, pour prévenir les pertes d'injectivité lors de l'injection de CO₂ dans un aquifère salin, repose sur une diminution de la mouillabilité à l'eau autour du puits.

En annulant la mouillabilité à l'eau de l'échantillon cylindrique précédemment décrit, un front de séchage apparaît, mais la saumure reste à sa concentration initiale et le sel ne s'accumule pas à un endroit particulier dans l'échantillon. La précipitation de sel engendre alors une altération très modérée de perméabilité.

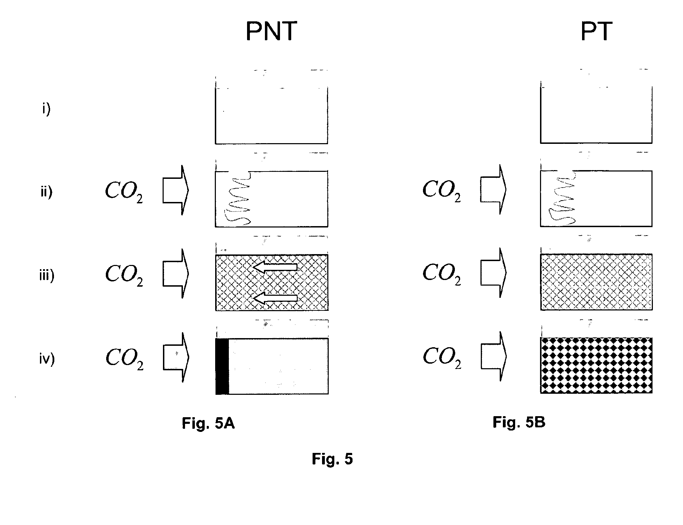

Ce principe est illustré sur les figures 5A et 5B. La figure 5A illustre le phénomène de précipitation de sels dans le cadre d'injection de CO₂ classique, c'est-à-dire dans le cadre de puits non traités (PNT). La figure 5B illustre l'effet de la réduction de mouillabilité à l'eau de la roche, lorsque le puits est traité (PT). Sur ces deux figures :
- le schéma a) montre la roche et la saturation initiale en saumure. La saumure est représentée en blanc ;
- le schéma b) illustre l'injection de CO₂. Les flèches grises indiquent la direction d'avancé du CO₂. Le CO₂ est représenté en gris ;
- le schéma c) montre la roche et la saturation résiduelle en saumure. Le CO₂ a envahi la roche, qui contient de la saumure (en blanc) et du CO₂ (en gris). Sur la figure 5A, les flèches blanches illustrent le contre écoulement capillaire (retour de la saumure vers le point d'injection) ;
- le schéma d) illustre la précipitation des sels (en noirs). Dans le cadre de puits non traité, les cristaux de sels se sont formés en grande quantité uniquement à la paroi, provoquant une baisse de l'injectivité. Au contraire, sur la figure 5B, la précipitation de sels reste modérée à la paroi.

La mouillabilité d'une roche caractérise l'affinité préférentielle d'un fluide pour le milieu poreux. Cette propriété résulte du bilan des forces d'attraction ou de répulsion entre les molécules fluide et solide. Sur une surface plane et lisse, la mouillabilité est définie par l'angle de mouillage. Le fluide mouillant est le fluide pour lequel, l'angle formé par le ménisque est inférieur à 90°.

Ainsi, le procédé de stockage de CO₂ selon l'invention, comporte trois phases :
1. On réalise un forage de puits d'injection jusqu'à atteindre un aquifère salin;
2. On injecte un produit permettant de réduire la mouillabilité à l'eau de la roche de l'aquifère au voisinage du puits; et
3. On injecte le CO₂ dans l'aquifère salin.

### 1. On réalise un forage de puits d'injection jusqu'à atteindre un aquifère salin.

Le forage est une technique bien connue des spécialistes. Classiquement, un premier trou de large diamètre est foré depuis la surface jusqu'à quelques dizaines de mètres. Puis, ce premier trou est consolidé par un tubage ("casing") et cimenté pour assurer la cohésion entre le terrain et le tubage. Puis, à travers ce tubage on introduite le trépan pour continuer le forage en profondeur avec un diamètre plus petit. Ce second trou est à son tour tubé puis cimenté. Suivant la profondeur à atteindre jusqu'à 5 trous de diamètres de plus en plus petits peuvent être forés.

Selon une technique de production "open hole", le dernier trou situé dans l'aquifère, n'est pas tubé, permettant ainsi une connexion importante entre le puits et l'aquifère. Pour certaines roches plus fragile, le dernier trou est tubé et perforé au niveau de l'aquifère permettant au gaz de se répandre dans l'aquifère pour y être stocké.

### 2. On injecte un produit permettant de réduire la mouillabilité à l'eau

L'injection du produit se fait de la même façon que le CO₂ : au sein du puits foré pour être libéré en tête de puits et se répandre aux abords du puits.

### a. Choix du type de produit injecté

Le produit permettant de réduire la mouillabilité à l'eau est injecté sous forme de solution. Différentes solutions existent déjà dans l'industrie pétrolière pour diminuer la mouillabilité à l'eau d'une roche. Le principe est d'injecter un bouchon de produit aux abords (généralement sur une dizaine de mètre) du puits susceptibles de s'absorber à la surface du milieu poreux. La mouillabilité de la zone traitée est alors modifiée.

Tout type de produit abaissant la mouillabilité à l'eau d'une roche peut convenir pour la technique de prévention de précipitation de sel selon l'invention. En particulier, les produits suivant peuvent être utilisés :
- les amines (hexadécylamine, amines polyéthoxylés)
- les surfactants cationiques en particulier les sels d'alkylammonium (R-N+(CH3)3
- les quinoléines, les porphyrines par exemple le VO OEP (Vanadyl-octaethyl-porphyrin)
- les acides gras (acide palmitique, acide oléique, acide stéarique)

### b. Choix du volume du produit injecté

On injecte un volume précis de produit dans le massif poreux aux abords du puits. Le produit permettant de réduire la mouillabilité à l'eau de la roche de l'aquifère au voisinage du puits sur une distance déterminée.

Le volume à injecter du produit modifiant la mouillabilité dépend de la taille de la zone à traiter. La zone à traiter constitue le voisinage du puits, que l'on définit en terme de distance au puits (typiquement une dizaine de mètre autours du puits) et en terme de hauteur (typiquement la taille du dernier trou.)

Après avoir défini une hauteur et une distance au puits, on en déduit le volume de la zone à traiter.

Considérant de plus, la porosité de la roche constituant cette zone, on peut en déduire le volume de produit à injecter.

Ainsi, en mettant en contact une zone proche du puits avec le produit, on assure une diminution importante des risques d'accumulation de sel dissous dans la saumure proche du puits et ainsi, on limite très fortement le risque d'altération de perméabilité dans le temps.

### c. Choix de la pression d'injection

La pression d'injection se détermine en fonction des propriétés pétrophysiques de la roche constituant la zone à traiter, et plus généralement des propriétés de l'aquifère salin.

### d. Choix du moment de l'injection

Selon un mode de réalisation, l'injection de ce produit est réalisée avant toute injection de CO₂ dans l'aquifère salin.

Selon un autre mode de réalisation, l'injection de ce produit est réalisée après une première injection de CO₂ dans l'aquifère salin. La durée de cette première injection de CO₂ est relativement courte : cette durée est définie de façon à assécher le voisinage du puits sans toutefois conduire à une perte d'injectivité. Cette durée peut être déterminée en fonction de la nature de la roche constituant l'aquifère salin, des conditions thermodynamiques régnant dans l'aquifère salin aux abords du puits, et les propriétés thermodynamiques de CO₂ injecté (pression, température, ...).

Enfin selon un autre mode de réalisation, on réalise plusieurs injections de produit permettant de réduire la mouillabilité à l'eau. Ces différentes injections sont réalisées pour maintenir la réduction de la mouillabilité à l'eau, si l'injection devait conduire à une élimination progressive du produit aux abords du puits.

### 3. On injecte le CO₂ dans l'aquifère salin.

Le CO₂ est injecté par le même puits.

Selon un mode de réalisation, un temps d'attente est pratiqué entre l'injection du produit permettant de réduire la mouillabilité à l'eau et l'injection du CO₂. Le temps d'attente est défini de façon à permettre au produit de réduire suffisamment la mouillabilité à l'eau de la roche de l'aquifère. Cette attente, permet en effet de laisser agir le produit; et donc d'améliorer le phénomène de réduction de la mouillabilité.

## Revendications

1. Procédé de stockage de CO₂ dans un aquifère salin, dans lequel on réalise un forage d'au moins un puits d'injection jusqu'à atteindre l'aquifère salin, et on injecte le CO₂ dans l'aquifère salin, **caractérisé en ce que** préalablement à une injection de CO₂, on injecte un produit permettant de réduire la mouillabilité à l'eau de la roche de l'aquifère au voisinage du puits.

2. Procédé selon la revendication 1, dans lequel on injecte le produit avant toute injection de CO₂ dans l'aquifère salin.

3. Procédé selon la revendication 1, dans lequel on injecte le produit après une première injection de CO₂, ladite première injection de CO₂ étant arrêtée avant apparition d'une perte d'injectivité.

4. Procédé selon l'une des revendications précédentes, dans lequel on réalise successivement des injections de produit et des injections de CO₂.

5. Procédé selon l'une des revendications précédentes, dans lequel on marque un temps d'attente entre une injection de produit et une injection de CO₂, le temps d'attente étant défini de façon à permettre au produit de réduire suffisamment la mouillabilité à l'eau de la roche de l'aquifère.

6. Procédé selon l'une des revendications précédentes, dans lequel on choisit ledit produit parmi les produits suivants :
- amines ;
- surfactants cationiques en particulier des sels d'alkylammonium ;
- quinoléines, porphyrines en particulier le Vanadyl-octaethyl-porphyric ;
- acides gras.
